# EUROPEAN PATENT SPECIFICATION

(11) **EP 3 194 348 B1**
(45) Date of publication and mention of the grant of the patent: **08.03.2023**
(21) Application number: 15767361.7
(22) Date of filing: 28.08.2015
(51) Int. Cl.: C02F 3/00, C05F 17/40, C05F 17/50, C05F 17/90, C05F 3/00, C05F 3/06, C02F 3/28, C02F 103/20

(54) **METHOD FOR PROCESSING POULTRY MANURE FOR GETTING ORGANIC FERTILIZER AND BIOGAS**
VERFAHREN ZUR VERARBEITUNG VON GEFLÜGELGÜLLE ZUR GEWINNUNG VON ORGANISCHEM DÜNGEMITTEL UND BIOGAS
PROCÉDÉ POUR LE TRAITEMENT DE FIENTES DE VOLAILLE POUR OBTENIR DE L'ENGRAIS ORGANIQUE ET DU BIOGAZ

(30) Priority: 05.09.2014 UA 201409752
(43) Date of publication of application: 26.07.2017
(73) Proprietor: LLC Integro-SD., Kyiv 03138 (UA)
(72) Inventor: SEVERYLOV, Pavlo Viktorovych, Vinnytsia 21030 (UA)
(74) Representative: Jeck, Anton
(86) International application number: PCT/UA2015/000078
(87) International publication number: WO 2016/036339

(56) References cited:
- EP-A1- 2 208 712
- WO-A1-2009/055793
- CA-A1- 2 258 254
- US-A1- 2003 075 501
- US-A1- 2005 167 359
- CHAOHAI WEI ET AL: "Treatment of food processing wastewater in a full-scale jet biogas internal loop anaerobic fluidized bed reactor", BIODEGRADATION, KLUWER ACADEMIC PUBLISHERS, DO, vol. 22, no. 2, 19 August 2010 (2010-08-19), pages 347-357, XP019886933, ISSN: 1572-9729, DOI: 10.1007/S10532-010-9405-5

## Description

This invention relates generally to the method of biological processing of organic mass, in particular, poultry manure, and may be used both in agriculture and other fields for obtaining biogas and organically clean fertilizers in accordance with claim 1.

Most of the modern biogas plants are characterized by a considerable total amount of equipment, which, in general, includes a tank for substrate accumulation or a bin for feeding solid material, several fermenters, a pumping-and-dispensing station, lagoons for fermented mass, gasholders, a system for after purification of biogas, a co-generation unit, and a heat supply unit. Such equipment is necessary mainly due to the fact that the plant is designed for obtaining large volumes of biogas. At the current stage, there is a tendency to re-orient from obtaining biogas as main product to producing organic fertilizers as main product with biogas as byproduct, which simplifies the design of plants and decreases the cost of their maintenance.

It is known that the use of filtrate mixed with clean manure is an important part of substrate preparation. The substrate made of clean poultry manure has higher nitrogen-to-carbon ratio than normally balanced substrates have. Excessive nitrogen is emitted from input proteins and, as the result of biochemical reactions, turns into ammonium ions. Ammonium is toxic to bacteria and leads to their death. Ammonium ions decay yielding hydrogen nitride (ammonia). Ammonia is tenfold more toxic than ammonium.

The use of substrate made of poultry manure mixed with the filtrate of output slime in conventional fermenters leads to the decrease of the number of bacteria in the fermenter, until it reaches minimum level and the reaction stops.

In order to lower the negative impact of nitrogen compounds (ammonium and ammonia), before being fed to the bioreactor input, the filtrate is additionally treated with chemical or mineral agents (e.g. zeolite). It leads to additional costs and, most important, does not allow obtaining pure organic fertilizers, either solid or liquid.

There are known plants for processing organic waste and yielding biogas and organic fertilizers, in particular, at the following websites from the Internet:
http://www.lipp-system.de/53-biogas systems.html - Lipp GmbH;
http://www.mt-energie.com/ - MT Energie;
http://www.envitec-biogas.com/ - Envitec Biogas;
http://www.schmack-biogas.com/ - Schmack Biogas;
http://rueckert-naturgas.de/ - Ruckert NatUrgas, et al.

The main direction of the use of the mentioned plants is obtaining of biogas, which means larger amount of equipment for processing the mixture into gas and lower quality of the output substrate as biohumus.

Most of the known methods of processing poultry manure and the units designed for that purpose have a number of disadvantages. They envisage:
- use of chemical or mineral substances for treating the filtrate;
- use of additional amount of water that is a critical and expensive resource;
- creation of considerably large storage spaces for fermented mass.

Similar solutions for processing biological waste for getting organic fertilizers and biogas and the apparatus for their realization are known too.

Known is the method for processing agricultural waste for getting biogas and fertilizers according to the UA 12596, Publication date: 15.02.2006, according to which the waste is separated by the type and into solid and liquid fractions and also sorted by the contents with equal length of fermentation cycle; then, the liquid part is loaded into a tank and sorted types of waste are placed separately into penetrable containers, which are submersed into the tank, the time of dwell of the containers in the tank not exceeding the technological length of fermentation cycle for each type of separated waste; unloading of the containers with fermented waste is performed simultaneously with their fractioning and returning of the liquid part of the waste into the tank, with the fluid containing anaerobic microorganisms partially remaining in the tank.

The disadvantage of this method is that due to the fact that it is designed for processing all types of agricultural waste, necessary fractioning into solid and liquid parts as well as sorting by type and contents (straw-grass-manure), it requires larger amount of equipment (number of containers), which leads to the increase of complexity of the unit for the realization of this method. Besides, the determined length of fermentation cycle (between 80 and 123 days, depending on the contents of waste) is excessive.

Known methods for processing of organic matters for getting biogas and organic fertilizers and the units for their realization are: US 7727395 B2, Publication date: 06.01.2010; DE 102009043846 A1, Publication date: 03.03.2011; DE 102010032916 A1, Publication date: 02.02.2012; EP 2666868 A1, Publication date: 27.11.2013; WO 2012/152266 A3, Publication date: 15.11.2012; WO 2014/090376 A2, Publication date: 19.06.2014; RU 133 829 U1, Publication date: 27.10.2013; RU 2404240 C2, Publication date: 20.11.2010; RU 2 226 047 C1, Publication date: 27.03.2004; UA 29997 U, Publication date: 11.02.2008; UA 75605 C2, Publication date: 15.05.2006; UA 64019 U, Publication date: 25.10.2011; UA 77213 U, Publication date: 11.02.2013; UA 87422 U, Publication date: 10.02.2014.

Also, known is the method for getting biogas and biofertilizers from organic waste according to UA 64020, Publication date: 25.10.2011, according to which the organic matter is reduced to small fragments, heated up, homogenized, and processed anaerobically in two stages; the fermented mass is unloaded, the fermented solution is separated, the fragmented organic mass is diluted to working humidity level with the filtrate of fermented solution or water; mineral admixtures contained in the organic mass (e.g. poultry manure) sedimentate in the process of hydrolysis into the pit of the hydrolyzer and are dumped outside, and hydrolyzed solution is passed on for fermentation through macerator, in which grinding of hard particles is performed simultaneously.

The disadvantage of this method is that during processing of organic waste the water is used that is a critical and valuable resource, and it also requires tanks for storing large volumes of it, which leads to great complexity of the unit for realization of this method and increase of the cost of obtaining organic fertilizer and biogas. Besides, the substrate mass hydrolysis lasts for 6-8 days, which is a considerably long period, and it in general prolongs the time of hydraulic dwell of the substrate in the bioreactor.

Also known is an apparatus for processing organic waste according to the "fixed film" technology, which may help realize the method of processing of drainage manure according to US 7297274, Publications date: 20.11.2007. This unit consists of a closed septic tank (with fixed or flexible lid), inner space for the development of biofilm, a device for collecting biogas and a flare system, various pumps, and hydraulic control systems. The prevailing environment includes almost vertically-oriented uninterrupted channels for immobilization of anaerobic microorganisms and development of biofilm, which allows purification of sewage at the ambient temperature or higher temperatures during the acceptable time of hydraulic dwell of the mixture.

The prototype is the apparatus and method for processing of animal manure by the "fixed film" technology according to US 6811701, Publication date: 02.11.2004. This apparatus includes a closed septic tank with floor and lid, divided into upper zone and lower zone; the environment for the development of biofilm is maintained in the septic tank that includes vertically-oriented uninterrupted channels for immobilization of anaerobic microorganisms, influx line for directing husbandry sewage into the septic tank, drainage line for extraction of processed husbandry sewage from the septic tank, a manhole for inspecting and maintenance of the mentioned environment, and a device for biogas collection.

The mixture for processing in this apparatus is livestock manure that is more balanced and is, respectively, more compatible with the "fixed film" technology than, for instance, chicken manure.

The disadvantage both of these apparatus and method is that the use of such raw materials as poultry manure in them leads to instability and disruption of fermentation process because of special properties of this material; they require additional treatment of the filtrate in order to decrease its negative impact on fermentation process, or its extraction and storage.

The present invention overcomes the above noted deficiencies by establishing a steady biological process of transformation of clean poultry manure yielding biogas as a byproduct without using additional means of filtrate and water treatment.

From EP 2 208 712 A1 discloses a process and a plant for producing biogas, comprising a hydrolytic phase, an acidogenic-acetogenic phase and a methanogenic phase, carried out in separate reactors and under controlled pH, temperature and stirring rate conditions, wherein the hydrolytic phase is carried out under aerobic conditions, preferably with oxygen insufflation. In an embodiment, the acetogenic phase is maintained at pH ≥ 6, preferably at pH of 6.0 to 7.0, more preferably 6.2 to 6.5. In another embodiment, each reactor of the plant comprises a coating with net and inert substances arranged along the reactor walls and/or a heating system, preferably a heating coil, arranged along the internal wall of each reactor and at a distance therefrom.

Chaohai Wei et al ISSN: 1572-9729 teaches an apparatus for treating food processing waste water where effluent from anaerobic digestion is mixed with food
processing wastewater in an equalization basin equipped with stirring means before addition of flocculating agent and removal of suspended solids, the resulting liquid is introduced in a "jet biogas internal loop anaerobic fluidized" reactor, after
separation liquid/solid, the water is reintroduced with the food processing wastewater.

CA 2 258 254 A1 shows a plant for treatment of organic sludge and urban waste comprising a hydrolysis reactor with stirring means, an anaerobic digestion
in a fixed bed reactor and a separator. A part of the sludge from fixed bed reactor are recirculated to be mixed with the urban wastes.

The objective underlying the present invention is the provision of an alternative method of processing poultry manure for getting organic fertilizer and biogas alternative method.

The objective is achieved according to the present invention by a method with the features of claim 1.

This advantage is achieved in such way that, according to invention, the method for processing poultry manure for getting organic fertilizer and biogas, comprising the steps of: feeding manure to the bioreactor with further fermentation and emission of biogas, separation of the mass obtained through fermentation into solid fraction and filtrate by mechanical means; a larger part of filtrate is fed to the bioreactor input and mixed with poultry manure; the mixing is performed in a separate mixing zone where the mixture is stirred, hydrolyzed and subsequently fed to the fermentation zone designed by the "fixed film" technology where it is stirred again; a part of the filtrate that is fed to the mixing zone is adjusted so that the moisture of the mixture of filtrate and manure should be in the range of 86 and 92 %; before feeding to the fermentation zone, the mixture is conditioned at +25°C or higher for 24 hours minimum; periodicity of mixture feeding does not exceed 24 hours and the weight of one portion of the mixture feeding should not exceed 9 % of the total weight of the mixture in the bioreactor; fermentation in the zone according to the "fixed film" technology runs at the temperature of +40°C...+50°C; and periodicity of mixture feeding from mixing zone to fermentation zone as well as the weight of one portion of mixture feeding ensure hydraulic dwell time of the mixture in the bioreactor within 11 to 14 days.

In the one embodiment, the method comprising the feeding the filtrate from the bioreactor output to the container for accumulating filtrate with further feeding to the mixing zone.

In the other embodiment, the method comprising the feeding the filtrate from the bioreactor output to the container for accumulating filtrate at the range of 70 to 90 % of the weight of filtrate from the bioreactor output.

In the other embodiment, the stirring of the mixture in the mixing zone is done hydraulically.

In the other embodiment, the stirring of the mixture in the fermentation zone is done hydraulically.

In the other embodiment, the stirring of the mixture in the fermentation zone is done through adding biogas.

In the other embodiment, the stirring of the mixture is done hydraulically through sprinkling the mixture from the upper part of the fermentation zone.

Besides, the invention relates to a bioreactor, that will ensure steady biological process of transformation of clean poultry manure due to its advanced design.

This advantage is achieved in such way that the bioreactor for processing poultry manure for getting organic fertilizer and biogas comprising the means for fermenting by the "fixed film" technology, the means for biogas extraction, at least one mechanical device for separating the obtained product into solid fraction and filtrate; the bioreactor additionally contains at least two separate containers for mixing filtrate with manure equipped with means for stirring, means for feeding the filtrate to the containers for mixing filtrate with manure and means for feeding the obtained mixture to the fermenter including a fermentation zone equipped with the means for fermenting by the "fixed film" technology and means for stirring the mixture.

In the one embodiment, the device for stirring the mixture in the fermentation zone is equipped with means for feeding biogas to the mixture being stirred.

In the other embodiment, the device for stirring the mixture in the fermentation zone is equipped with means for sprinkling the mixture from the upper part of the fermentation zone.

In the other embodiment, the bioreactor comprising a container for collecting slime located between the fermentation zone and the mechanical device for separation of the prepared product.

In the other embodiment, a container for accumulating filtrate connected to the device for feeding filtrate to the bioreactor input.

In the other embodiment, the outlet of the means for feeding the obtained mixture into the fermenter is located approximately at the medium height of the fermenter's tank.

In the other embodiment, the bioreactor comprising the slime extraction device from the fermenter equipped with the inlet located in the lower part of the fermenter's tank.

In the other embodiment, the slime extraction device is a siphon.

The following cause-and-effect relation exists between the claims and the archived result according to the invention.

The important feature of the invention is the usage of filtrate together with clean manure for substrate preparation. The filtrate is the separated liquid fraction of the fermented slime at the output of the fermentation zone. Its application excludes the necessity of the usage of water for substrate preparation as well as the necessity to create storages of large volumes for filtrate and unseparated slime. However, recirculation of the filtrate causes the issue of increased concentration of ammonium ions and ammonia content in the substrate. The favourable effect of this increase is saturation of output slime and its separated derivatives (solid fraction and filtrate) with mineral and organic nitrogen, which considerably improves their value as organic biofertilizer. The adverse effect is the death of bacteria in the fermentation zone caused by the toxic effect of ammonium and ammonia. Exactly this method as well as the unit that helps to realize this method allows solving this issue with simultaneous achievement of the former effect.

Feeding the larger part of the filtrate, which is liquid, to the bioreactor input and mixing it with clean poultry manure ensures not only adequate humidity of the prepared mixture, in which water as a critical and expensive resource is replaced, but also eliminating the need to create large-volume storages for storing filtrate due to the cycling of the process of filtrate obtaining as the result of fermentation and feeding it to the bioreactor input again with further mixing with clean poultry manure.

Besides, feeding filtrate to the bioreactor input increases the concentration of nutrient substances in the solid fraction of the output material, i. e. biohumus. It is also important that the filtrate at the input to the bioreactor is fed unprocessed, i. e. free from chemical admixtures, which, at the end of the day, allows obtaining clean organic fertilizer to be used in agriculture.

For better course of the fermentation reactions in the fermentation zone, poultry manure and filtrate are preliminarily mixed together, which allows obtaining the mixture of necessary concentration and state. For that purpose, mixing is performed in the mixing zone with further feeding of the mixture into the fermentation zone designed by the "fixed film" technology. In the mixing zone, not only the stirring of the mixture happens, but also the hydrolysis process needed for further processing of the organic matter. Exactly in this zone, with the help of bacteria, happens the breakdown of complex input polymer materials into simple soluble compounds that later go into the fermentation zone. Thus, preliminary mixing of processing ingredients ensures the fermentation process that is the most important part of obtaining biogas and organic fertilizers.

The main goal of creation of the fermentation zone by the "fixed film" technology in the proposed invention is not in the acceleration of anaerobic fermentation with the use of mixture with well-balanced nitrogen-to-carbon ratio, as it is represented in most reactors, but in maintaining stability of anaerobic fermentation through the use of mixture of clean poultry manure with unfavourable nitrogen-to-carbon ratio.

To ensure adequate humidity of the mixture and, at the end of the day, to maintain the whole fermentation process, part of the filtrate that is fed to the mixing zone is adjusted so that humidity of the mixture of filtrate and poultry manure fall within the range of 86 to 92 %. As the result of multiple studies, the inventor found out that this exact range of humidity ensures efficient reactions in the mixing and fermentation zones.

When studying the tendencies of changes in the amount of gas depending on the humidity of the mixture of poultry manure and filtrate, the results were obtained that can be seen in Table 1.

**Table 1**

| The amount of obtained gas depending on the humidity of the mixture of poultry manure and filtrate | |
|---|---|
| Humidity of the mixture of poultry manure and filtrate, % | The amount of gas obtained, m³ |
| 85 | 3,11 |
| 86 | 3,45 |
| 87 | 3,20 |
| 88 | 3,19 |
| 89 | 3,15 |
| 90 | 3,07 |
| 91 | 2,94 |
| 92 | 2,77 |
| 95 | 2,02 |

Table 1 contains the results of experiments conducted in the conditions of steady daily loading of substrate amounting to 263.7 litres. As humidity is increased the amount of raw material is decreased and the volume of filtrate for making the mixture is increased. Accordingly, daily loaded amount of dry organic matter is decreased. This led to smaller daily yield of biogas as humidity of the mixture is decreased. This effect was partially compensated by deeper breakdown of organics with lower unit organic load of the bioreactor. According to the table, throughput capacity and productivity of the biogas plant increases as humidity of the loaded mixture decreases. Further decrease of humidity is impossible due to mechanical reasons: viscosity of the mixture reaches the point at which it becomes impossible to stir it and pump it through the piping.

The data in the table show that the value of humidity of the mixture of poultry manure and filtrate falling in the range between 86 and 92 % is the optimum and it ensures closer values of obtained gas varying insignificantly, which confirms that the process runs steadily and without adverse changes. The decrease of volume of obtained gas happens in case the humidity of the mixture of poultry manure and filtrate are lower or higher than the above mentioned range, which immediately points at less optimal conditions of gas generation and, therefore, at less optimal conditions of processing of organic matter.

Before feeding to the fermentation zone by the "fixed film" technology, the mixture is conditioned in the mixing zone at the temperature of +25°C or higher for at least 24 hours, which ensures efficient conditions for hydrolysis as the initial stage of fermentation. This term and this temperature of hydrolysis were established by the inventor as the result of multiple studies and experiments. It was found out that conditioning of the mixture for at least 24 hours at the temperature +25°C or higher was a sufficient condition for the bacterial breakdown of complex input polymer materials into simple soluble compounds.

The inventor also found out that periodicity of feeding of the mixture into the fermentation zone must not exceed 24 hours, which ensures stable pH value and contents of nutrient medium necessary for efficient fermentation. Besides, pH value and contents of nutrient medium are influenced by the amount of the mixture being fed. As the result of studies, the inventor established that the weight of a one-time portion must not exceed 9 % of total weight of the mixture in the bioreactor. This small size of each portion ensures correct acid-base balance in the fermentation zone as all fermentation processes in the mixing zone during hydrolysis require acid condition and the ones in the fermentation zone require alkaline condition. Thus, feeding of small-sized portions of the mixture does not considerably affect pH value in the fermentation zone ensuring alkaline conditions, and the established periodicity of feeding of mixture portions ensures stable nitrogen-to-carbon ratio together with "fixed film" technology, and steady arrival of material for processing and transportation from the mixing zone into the fermentation zone.

When studying the tendencies of changes in the amount of gas depending on the weight of one-time portion of the mixture that is fed for fermenting, the results were obtained that can be seen in Table 2.

**Table 2**

| The amount of obtained gas depending on the weight of one portion of the mixture feeding for fermenting | |
|---|---|
| The weight of one portion of the mixture feeding, % | Amount of gas obtained, m³ |
| 5 | 3,19 |
| 7 | 3,18 |
| 9 | 3,15 |
| 11 | 2,81 |
| 13 | 2,55 |

The obtained results show that in case of the weight of one-time portion fed for fermentation exceeding 9 % of the total weight of the mixture in the bioreactor, the amount of gas obtained changes drastically, which points at deterioration of stability of the process of organic matter transformation.

The inventor also found out that in order to maintain efficient fermentation process the temperature in the fermentation zone must be kept between +40°C and +50°C. This range allows quick and complete fermentation of organic matter and directly promotes the process of methane fermentation.

The periodicity of feeding of the mixture from the mixing zone into the fermentation zone by the "fixed film" technology and the weight of one-time portion of the mixture ensure the time of hydraulic dwell of the mixture in the bioreactor within 11 to 14 days, which helps not only ensure the stability of anaerobic fermentation reactions in general and optimize the process of transformation of organic matter but also accelerate the process of biogas and organic fertilizers generation.

Besides, the filtrate is fed from the bioreactor output to the accumulator that is the part of the bioreactor design with further feeding into the mixing zone, which allows short-term storage of the larger part of obtained filtrate before feeding in to the bioreactor input without using separate storage capacities. The inventor found out that the optimum amount of filtrate that is fed from the bioreactor output into the accumulator is between 70 and 90 % of the amount of filtrate at the bioreactor output. Thus, almost all of the filtrate is being used for the processing of organic matter. This accumulator ensures feeding of a part of the filtrate into the mixing zone in the amount and at the time that is necessary.

The use of this design of the fermenter with the fermentation zone in the bioreactor leads to the ratio of the amount of bacteria that are output with the slime and the amount of bacteria in the fermentation zone being not in direct proportion to the ratio of the size of portion of drainage slime and the volume of the mixture in the fermentation zone, but lower. Adding filtrate to the initial poultry manure increases the concentration of ammonium compounds and soluble ammonia in the mixture as well as the concentration of anaerobic bacteria in acetogenesis and methanogenesis phases. The availability of the fermentation zone in the proposed design of the plant allows compensating the decrease of the amount of bacteria in the fermentation zone caused by unfavourable effect of ammonium and ammonia as well as avoiding irreversible decrease of concentration of anaerobic bacteria in the fermentation zone.

The solutions of this type are normally used for accelerating the process of anaerobic fermentation that happens due to the increase of concentration of anaerobic bacteria in the fermentation zone. In the proposed invention, the technical solution described above is used for maintaining positive or neutral balance of change of the concentration of anaerobic bacteria in a-priori known unfavourable conditions.

An important factor for ensuring stable process of transformation is stirring of the mixture both in the mixing zone and the fermentation zone. Stirring of the mixture may be performed with any known accessory, either hydraulically or hydraulically by adding biogas or hydraulically by sprinkling the mixture from the upper part of the fermentation zone. These variants of mixing ensure optimum conditions for development and life of bacteria necessary for processing of organic matter and, therefore, they ensure stability of the transformation process as a whole.

In case of relatively small fermentation zone, a combination of the first and third variant of stirring is used. In case the size of the fermentation zone is increased, a combination of the second and third variants of stirring may be used.

For realization of this method of processing of organic matter, the inventor developed, designed, and tried the bioreactor for processing poultry manure that, apart from the means for fermentation by the "fixed film" technology, the means for extracting biogas, a mechanical accessory for separating the prepared product into solid fraction and filtrate, includes at least two detached tanks for mixing filtrate and manure equipped with an accessory for stirring, means for feeding filtrate into the tanks for mixing filtrate with manure, and a device for feeding prepared mixture to the fermentation zone by the "fixed film" technology equipped with an accessory for stirring the mixture.

The use of at least two tanks for mixing filtrate and manure in the bioreactor allows optimizing and accelerating the process of preparation of the mixture for feeding it into the fermentation zone because it is possible to perform settling and stirring in parallel. Thus, while the mixture is being settled in one of the tanks, it is being fed into the fermentation zone from the other where necessary settling and stirring as well as respective hydrolysis has already happened, and vice versa.

Due to the availability of an accessory for feeding filtrate into the tanks for mixing filtrate and manure, filtrate is fed from the filtrate accumulating tank. As an accessory for feeding filtrate, a piping system with a pump or some other device of the same function may be used. In the same way, feeding of the mixture from the mixing tank into the fermentation zone is performed by the accessory for feeding the prepared mixture into the fermentation zone. As an accessory for feeding the mixture into the fermentation zone, a device similar to the accessory for feeding filtrate may be used.

Besides, the accessory for stirring the mixture, depending on the method of stirring, may be equipped with a device for feeding biogas into the mixture being stirred or a device for sprinkling the mixture from the upper part of the fermentation zone. Availability of any of these devices ensures stirring of the mixture, which is one of the most important processes of transformation of organic matter.

The location of a tank for collecting slime between the fermentation zone and the mechanical device for separating the prepared product ensures the possibility to optimize bioreactor operation due to collecting of slime immediately after its output from the fermentation zone with short-term storage, if necessary, and further feeding to the mechanical device for separating the prepared product.

Connection of the tank for filtrate accumulation with the accessory for feeding filtrate allows immediate feeding of prepared filtrate to the bioreactor input, thus cycling the process of organic matter transformation and extraction of its products.

The proposed design of feeding and extracting slime from the fermenter, namely, location of the outlet opening of the accessory for feeding the mixture into the fermenter approximately at the medium height of the fermenter's tank and the inlet opening of the slime extraction device from the fermenter in the lower part of the fermenter's tank as well as the slime extraction device designed as a siphon allows achieving the effect of communicating vessels, which simplifies transportation of substances inside the bioreactor.

The proposed method according to the invention is described below in greater detail with reference to the drawing:
- Fig. 1 is a functional scheme of the bioreactor;

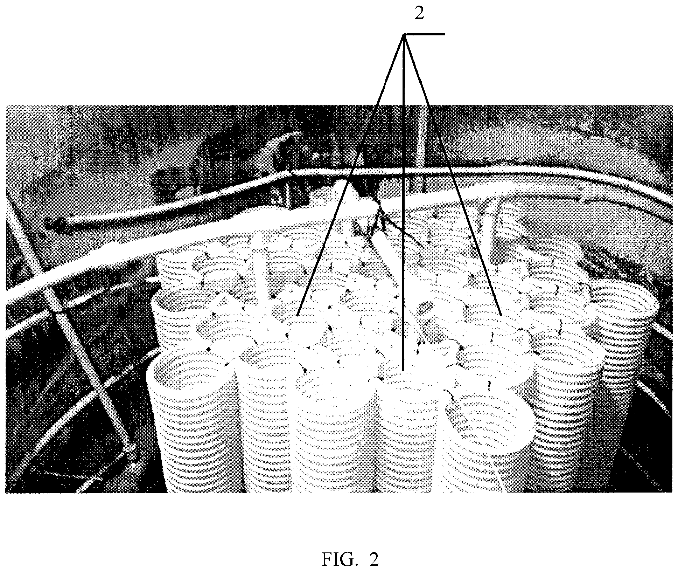

- Fig. 2 - the image of the fermentation zone of the bioreactor equipped with the "fixed film" technology.

The disclosure, including the accompanying drawings, is illustrated by way of example and not by way of limitation.

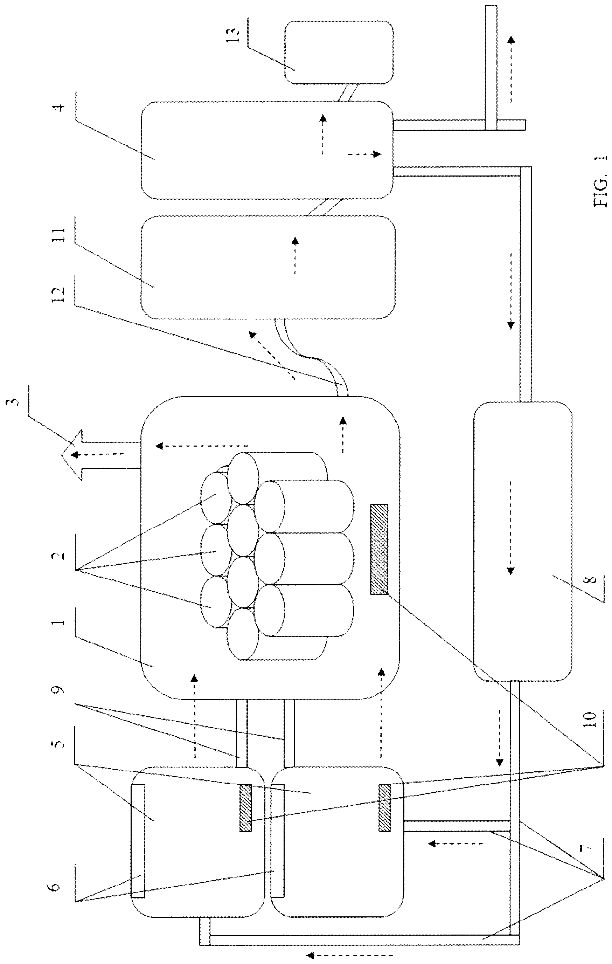

Figure 1 shows functional drawing of the bioreactor for processing poultry manure for getting organic fertilizers and biogas. The bioreactor includes fermenter (1) and means for performing fermentation by "fixed film" technology (2) placed inside of it. Together, these elements comprise the fermentation zone. The bioreactor also includes at least one mean for extracting biogas (3) and at least one mechanical device for separating the prepared product into solid fraction and filtrate realized as, spiral separator (4), for example. The bioreactor includes at least two separated containers for mixing (5) filtrate with manure and comprises the mixing zone.

Containers for mixing (5) may be equipped with a technological gasholder (6) for buffering changes in the level of input material. The gasholder (6) may be flexible for compensating fluctuations of the level of mixture in the containers for mixing (5) due to the change of its shape as, apart from mixing of poultry manure and filtrate and hydrolysis of the prepared mixture in these containers, insignificant emission of gas caused by bacterial activity at the third and fourth stage of fermentation may happen. Use of a gasholder (6) on the containers for mixing (5) filtrate and manure ensures buffering biogas emitted in the mixing zone and compensating for the fluctuations of the level of input material at the same time.

Besides, the bioreactor includes means for feeding filtrate (7) into containers for mixing filtrate and manure and a container for accumulating filtrate (8) that is connected to means for feeding filtrate (7) to the bioreactor input. The mixing and fermentation zones are interconnected with means for feeding obtained mixture (9) into the fermentation zone. The fermentation zone includes means for performing fermentation by "fixed film" technology (2), on which large film of anaerobic bacteria is formed by the "fixed film" technology.

The mixing and fermentation zones are equipped with a device for stirring of the mixture (10) controlled by a programmable controller, PLC (not shown). This device for stirring of the mixture (10) is equipped with means for feeding biogas to the mixture being stirred or means for sprinkling the mixture from the upper part of the fermenter (1) (not shown).

The bioreactor includes a container for collecting slime (11) and may also include an additional container for collecting slime, from which the mixture is fed to the separator (4).

According to the invention, the method for processing poultry manure for getting organic fertilizer and biogas is performed by the bioreactor in the following way:
The output products of processing in the bioreactor are biohumus, filtrate, and gas emitted from the fermenter. The gas is extracted through the check valve (3) with consecutive accounting of its passage and is dumped into the ambient environment. If necessary, biogas may be extracted into relevant containers for storage or transportation.

The output slime is clean and environmentally friendly organic fertilizer. The slime is separated into biohumus and filtrate. Part of the filtrate is used for preparation of the mixture. Excessive filtrate may be dumped into conventional sewers as it is the decontaminated fermented manure which is essentially harmless and can be drained into sewage system or used as liquid biofertilizer.

For the launch of the bioreactor industrial water is used only once.

The prepared mixture of poultry manure and filtrate, at the operator's command from the control panel (not shown), is pumped from one container for mixing to the other container for mixing (5) that is equipped with the technological gasholder (6) for buffering changes of the mixture level caused by asynchronicity of feeding and pumping of the mixture. Part of the filtrate being fed into the mixing zone is adjusted so that the humidity of the mixture of filtrate and manure be in the range between 86 and 92%. In the container for mixing (5), the mixture is kept for averagely 1.5 top 3 days at the temperature of +25°C. The time of dwell of the mixture in the container for mixing (5) is adjusted by the operator through changing maximum filling level of the container for mixing (5).

The mixture in the container for mixing (5) is stirred periodically with the device for stirring the mixture (10) being managed by the commands of the PLC.

Stirring of the mixture may be realized in several different ways. The means for performing fermentation by the "fixed film" technology (2) are located in the upper part of the fermenter (1) and the bottom part of the fermenter (1) is free. Therefore, the one of the embodiment of the invention consists in stirring the mixture only in this part. Vertical movement of the mixture through the means (2) is provided by the bubbles of biogas being emitted. Thus, hydraulic stirring of the mixture is performed. The second embodiment is performed in a similar way but for mixing with the help of biogas, the biogas is added with the accessory for feeding biogas from the gas generation or gas storage zone. Further on, this biogas ensures vertical movement of the mixture. Thus, hydraulic mixing with adding biogas is performed. According to the third embodiment, the mixture is lifted from the bottom of the unit and is sprinkled from the upper part downwards in the shape of a cone into the fermenting zone with the help of a sprinkling device. Thus, stirring of the mixture is performed hydraulically by the way of sprinkling the mixture from the upper part of the fermentation zone.

From the container for mixing (5), at the command of the PLC, the mixture is pumped in small-sized portions averagely once in an hour through the means for feeding the obtained mixture (9), e.g. piping, into the fermentation zone; the weight of the one portion of mixture feeding does not exceed 9 %of the total weight of the mixture in the bioreactor. Fermentation in the zone by the "fixed film" technology is performed at the temperature between +40°C and +50°C. The fermenter (1) includes relevant means for performing fermentation by "fixed film" technology (2), e.g. in form of a set of cylindrical coaxial surfaces on which the film of immobilized anaerobic bacteria is formed. The mixture in the fermenter (1) is stirred periodically at the commands of the PLC, in particular, in automated mode. The means for feeding obtained mixture (9) into the fermenter (e.g. piping input) is located approximately at the medium height of the fermenter's tank, which creates a hydroseal in the fermenter filled with the mixture. The slime extraction device for extracting slime from the fermenter (12), e.g. in form of a siphon, located in the lower part of the fermenter tank (1), goes up to the height of the mixture level in the fermenter (1) and then goes down to the container for collecting slime (11). Thus, the effect of communicating vessels is achieved when the mixture arrives into the fermentation zone and the equivalent quantity of slime is drained through the output pipe simultaneously.

The gas emitted is fed to the panel of counters and hydroseals and then dumped into the atmosphere. If necessary, biogas may be extracted into relevant containers for storage or transportation.

If it is necessary to keep the bioreactor compact-sized the slime from the container for collecting slime (11) may be pumped at the operator's command into a different buffer container for slime near the separator (4). From there, slime flows passively into the separator (4). The filtrate from the separator (4) is fed into the container for accumulating filtrate (8) then into the mixing zone with the help of the means for feeding filtrate (7) into means for mixing filtrate and manure. Biohumus is collected into additional containers (13) and then stored at the warehouse, for example.

Periodicity of feeding of the mixture into the fermentation zone by the "fixed film" technology and the weight of the one portion of the mixture feeding ensure the time of hydraulic dwell of the mixture in the bioreactor in the range of 11 to 14 days.

Thus, the present invention allows establishment of a very stable biological process of transformation of pure poultry manure, which will provide obtaining organic fertilizers and biogas as a byproduct without usage of additional means of filtrate treatment and water; it also allows use of the bioreactor that, due to its advantages, will ensure stability of biological processing of pure poultry manure.

## Claims

1. Method for processing poultry manure for getting organic fertilizer and biogas, comprising steps of: feeding manure to a bioreactor with further fermentation and emission of biogas, separation of a mass obtained through fermentation into solid fraction and filtrate by mechanical means, ***characterized in that*** a larger part of a filtrate is fed to a bioreactor input and mixed with poultry manure; the mixing is performed in a separate mixing zone where a mixture is stirred, hydrolyzed and subsequently fed to a fermentation zone designed by a "fixed film" technology where it is stirred again; a part of the filtrate that is fed to the mixing zone is adjusted so that a moisture of the mixture of the filtrate and manure should be in the range of 86 and 92 %; before feeding to the fermentation zone, the mixture is conditioned at +25°C or higher for 24 hours minimum; periodicity of the mixture feeding does not exceed 24 hours and a weight of a one portion of the mixture feeding should not exceed 9 % of the total weight of the mixture in the bioreactor; fermentation in the zone according to the "fixed film" technology runs at a temperature of +40°C...+50°C; and periodicity of the mixture feeding from the mixing zone to the fermentation zone as well as a weight of the one portion of mixture feeding ensure hydraulic dwell time of the mixture in the bioreactor from 11 to 14 days.

2. The method of claim 1, comprising a feeding of the filtrate from the bioreactor output to the container for accumulating filtrate (8) with a further feeding to the mixing zone.

3. The method of claim 2, comprising the feeding of the filtrate from the bioreactor output to the container for accumulating filtrate (8) at the range of 70 to 90 % of the weight of the filtrate from the bioreactor output.

4. The method of claim 1, wherein the stirring of the mixture in the fermentation zone is done through adding biogas.

## Patentansprüche

1. Verfahren zur Verarbeitung von Geflügelmist zur Gewinnung von organischem Dünger und Biogas, aufweisend die Schritte: Zuführen von Gülle zu einem Bioreaktor mit weiterer Fermentation und Emission von Biogas, Trennen einer durch Fermentation erhaltenen Masse in eine feste Fraktion und Filtrieren durch mechanische Mittel,
**dadurch gekennzeichnet,**
**dass** ein größerer Teil eines Filtrats einem Bioreaktoreingang zugeführt und mit Geflügelmist vermischt wird; das Mischen wird in einer separaten Mischzone durchgeführt, wo eine Mischung gerührt, hydrolysiert und einer Fermentationszone zugeführt wird, die als eine "fixed film"-Technologie ausgeführt ist, wo sie erneut gerührt wird; ein Teil des der Mischzone zugeführten Filtrats wird so eingestellt, dass die Feuchtigkeit der Mischung aus Filtrat und Gülle im Bereich von 86 bis 92 % liegen sollte; vor der Zufuhr in die Fermentationszone wird die Mischung mindestens 24 Stunden lang bei +25 ° C oder höher konditioniert; wobei die Periodizität der Mischungszufuhr 24 Stunden nicht überschreitet und das Gewicht einer Portion der Mischungszufuhr 9 % des Gesamtgewichts der Mischung im Bioreaktor nicht überschreiten sollte; Die Fermentation in der Zone nach der "Fixed Film" -Technologie verläuft bei einer Temperatur von +40 ° C ... +50 ° C; und Periodizität der Mischungszuführung von der Mischzone zur Fermentationszone sowie ein Gewicht der einen Portion der Mischungszuführung gewährleisten eine hydraulische Verweilzeit der Mischung im Bioreaktor von 11 bis 14 Tagen.

2. Verfahren nach Anspruch 1, umfassend eine Zuführung des Filtrats aus dem Bioreaktor Ausgang zum Sammelbehälter für Filtrat (8) mit weiterer Zuführung zur Mischzone.

3. Verfahren nach Anspruch 2, umfassend das Zuführen des Filtrats aus dem Bioreaktor Ausgabe an den Behälter zum Sammeln von Filtrat (8) im Bereich von 70 bis 90 % des Gewichts des Filtrats aus der Bioreaktorausgabe.

4. Verfahren nach Anspruch 1, wobei das Rühren der Mischung in der Fermentationszone Zone durch Zugabe von Biogas erfolgt.

## Revendications

1. Procédé pour la transformation de fiente de volailles pour l'extraction d'engrais organiques et de biogaz présentant les étapes suivantes : Alimentation en lisier dans un bioréacteur avec une fermentation supplémentaire et l'émission de biogaz, la séparation d'une masse obtenue de la fermentation en fraction solide et la filtration par des moyens mécaniques est caractérisé de sorte qu' Une grande partie d'un filtrat est amenée vers une entrée du bioréacteur et est mélangée avec du fiente de volailles; Le mélange est exécuté dans une zone de mélange indépendante où le mélange est remué, hydraulisé et amené vers une zone de fermentation qui est effectuée par le biais d'une technologie de « couche fixe » où elle est remuée à nouveau; Une partie de la zone de mélange alimentant le filtrat est ajustée au point que l'humidité du mélange du filtrat et du lisier devrait se situer au niveau de la plage de 86 à 92%; Le mélange avant l'alimentation dans la zone de fermentation est conditionné au minimum pendant 24 heures à 25 ° C ou supérieur où la périodicité de l'alimentation du mélange ne dépasse pas 24 heures et le poids de la portion de l'apport du mélange ne dépasse pas 9% du poids global du mélange au sein du bioréacteur; La fermentation dans la zone selon la technologie « couche fixe » se déroule dans une température de +40 ° C ... +50 ° C; et la périodicité de l'alimentation du mélange dans la zone de mélange vers la zone de fermentation et le poids de la portion de l'alimentation du mélange garantit un temps de rétention hydraulique du mélange au sein du bioréacteur de 11 jusqu'à 14 jours.

2. Procédé selon la revendication 1 comportant une alimentation du filtrat de la sortie du bioréacteur au récipient collecteur pour le filtrat (8) avec une alimentation supplémentaire vers la zone de mélange.

3. Procédé selon la revendication 2 comportant une alimentation du filtrat de la sortie au récipient pour le recueil du filtrat (8) dans la plage de 70 jusqu'à 90% du poids du filtrat de la sortie du bioréacteur.

4. Procédé selon la revendication 1 où le malaxage du mélange dans la zone de fermentation se fasse par le biais de l'adjonction du biogaz.
